# EUROPEAN PATENT APPLICATION

(11) **EP 3 029 583 A1**
(43) Date of publication of application: **08.06.2016**
(21) Application number: 14832888.3
(22) Date of filing: 23.04.2014
(51) Int. Cl.: G06F 17/30

(54) **METHODS AND APPARATUSES FOR BUILDING TAG LIBRARY AND SEARCHING FOR USER**

(30) Priority: 02.08.2013 CN 201310334335
(71) Applicant: Xiaomi Inc., Beijing 100085 (CN)
(72) Inventor: XIANG, Jie, Beijing 100085 (CN); LI, Runchao, Beijing 100085 (CN); QIN, Tao, Beijing 100085 (CN)
(74) Representative: Perrot, Emilie
(86) International application number: PCT/CN2014/076042
(87) International publication number: WO 2015/014134

(57) **Abstract**

The present invention provides a method and a device for establishing a label library, and a method and a device for searching for a user. The method includes: receiving label information made by a labeling user concerning a labeled user in a social network; storing the labeling user, the labeled user, and the label information made by the labeling user concerning the labeled user as a user relationship, and establishing a label library based on at least one of the user relationships in the social network. Since the search is based on both conditions of label information and the user relationship, the user that is searched out has an indirect relationship with the searching user. Therefore, the user that is searched out is more reliable, and the success rate of the search may be improved.

## Description

This application is based upon and claims priority to Chinese Patent Application No. 201310334335.2, filed on August 2, 2013, the entire contents of which are incorporated herein by reference.

### TECHNICAL FIELD

The present invention relates to the field of computer and communication technology, and more particularly, relates to a method and a device for establishing a label library, and a method and a device for searching for a user.

### BACKGROUND

Owing to the development of the Internet technology, users may enjoy high-level and all-round services brought by the modern computer information technology. Social networking service (SNS), which emerges with the development of the Internet, has become a key force for pushing the Internet to get even closer to the real world. As a result, Internet has been extended to an application platform for research institutes, schools, governments, and businesses to a social communication tool for ordinary people to meet their social demands, taking place of the traditional social intercourse. The SNS, based on the principle of "low substitute cost", has effectively reduced time and substance costs in social intercourse, or in other words, effectively reduced costs in information management and transfer. With the SNS, it has become possible to send and receive emails to and from friends thousands of miles away, complete a project with them and enjoy entertainments together. In addition to that, other users may be searched for in the SNS, and may be added to the contact list, so as to make new friends to expand personal relationship and social communication circle.

At present, when searching for a contact according to a specific condition in the SNS, a user normally searches in his direct contact list or in the whole social network.

However, the above contact relationship between users is only limited to the direct contacts. That is, a user may only interconnect with contacts in his contact list. When searching for a user based on a certain condition, the user may only search in his direct contact list or in the whole social network. Nevertheless, such method for acquiring user information is target-less, with a reduced efficiency and accuracy of searching out a contact satisfying the condition.

### SUMMARY

In view of above, an objective of embodiments of the present invention is to provide a method and a device for establishing a label library, and a method and a device for searching for a user, in which a user may label other users in a social network; the made label being stored in a user relationship; a label library being obtained by storing the labels made by the user concerning other users and the user relationships; and with the label library, a search for a contact based on a label and the user relationship may be performed.

In one aspect, embodiments of the present invention provide a method for establishing a label library, including the following steps:
receiving label information made by a labeling user concerning a labeled user in a social network; and
storing the labeling user, the labeled user, and the label information made by the labeling user concerning the labeled user as a user relationship, and establishing a label library based on at least one user relationship in the social network.

In an embodiment of the present invention, a user may label other users in a social network; the made label is stored in a user relationship; a label library is obtained by storing the labels made by the user concerning other users and the user relationship; and with the label library, a search for a contact based on a label and the user relationship may be performed. Since the search is based on both conditions of label information and the user relationship, the user that is searched out has an indirect relationship with the searching user. Therefore, the user that is searched out is more reliable, and the success rate of the search may be improved.

In an embodiment, the label information made by the labeling user concerning the labeled user includes one or more items of information concerning the labeled user: occupation, skill, interest, adored celebrity, working state, and personal life state.

In an embodiment, prior to the step of receiving label information made by a labeling user concerning a labeled user in a social network, the method further includes:
receiving a request sent from the labeled user for inviting at least one labeling user to label the labeled user; and
sending a request for labeling the labeled user to each of the at least one labeling user.

In the embodiments of the present invention, a labeled user may initiatively invite another user to make a label for him or her, instead of passively waiting for another user to make a label for him or her, which improves flexibility of labeling and enhances user experience.

In an embodiment, the request sent from the labeled user for inviting at least one labeling user to label the labeled user includes: label information made by the labeled user concerning himself or herself; and
the request for labeling the labeled user sent to each of the at least one labeling user includes: the label information made by the labeled user concerning himself or herself.

In the embodiments of the present invention, a technical solution is provided in which the labeled user may provide the label information and request the labeling user to make a confirmation. Thereby, the labeled user may make label information by himself or herself, and the labeling user only needs to make a confirmation or modification of the label information, which further improves the flexibility of operations of the labeling user and the labeled user and enhances user experience.

In an embodiment, after the step of receiving label information made by a labeling user concerning a labeled user in a social network, the method further includes:
judging whether the labeled user permits labeling;
wherein the step of storing the labeling user, the labeled user, and the label information made by the labeling user concerning the labeled user as a user relationship, and establishing a label library based on at least one user relationship in the social network includes: when the labeled user permits labeling, storing the labeling user, the labeled user, and the label information made by the labeling user concerning the labeled user as a user relationship, and establishing the label library based on at least one user relationship in the social network.

In the embodiments, it is judged, according to the settings of the labeled user, whether to store the label information made by the labeling user concerning the labeled user; and only when the labeled user permits labeling, a label may be made concerning the labeled user. This may effectively prevent the user from being arbitrarily labeled and improve security and effectiveness of the label.

In an embodiment, after the step of receiving label information made by a labeling user concerning a labeled user in a social network, the method further includes:
sending the label information made by the labeling user concerning the labeled user to the labeled user for confirmation; and
judging whether a message indicating that the labeled user accepts the label information is received;
wherein the step of storing the labeling user, the labeled user, and the label information made by the labeling user concerning the labeled user as a user relationship, and establishing a label library based on at least one user relationship in the social network includes: when the message indicating that the labeled user accepts the label information is received, storing the labeling user, the labeled user, and the label information made by the labeling user concerning the labeled user as a user relationship, and establishing the label library based on at least one user relationship in the social network.

In the embodiments of the present invention, it is additionally judged whether the labeled user accepts the label information made by the labeling user concerning the labeled user, and the label information may be stored into the label library only when the labeled user accepts it. Thereby, it may effectively prevent the user from being arbitrarily labeled and improves security and effectiveness of the label.

In an embodiment, after the step of receiving label information made by a labeling user concerning a labeled user in a social network, the method further includes:
sending the label information made by the labeling user concerning the labeled user to the labeled user for additional information adding; and
receiving the label information having additional information added by the labeled user;
wherein the step of storing the labeling user, the labeled user, and the label information made by the labeling user concerning the labeled user as a user relationship, and establishing a label library based on at least one user relationship in the social network includes: storing the labeling user, the labeled user, and the additional information added label information as a user relationship, and establishing the label library based on at least one user relationship in the social network.

In the embodiments of the present invention, the labeled user may add additional information to the label information to enrich the label content, so the label may be more detailed and more accurate.

In an embodiment, the method further includes:
acquiring a validity period of the label information made by the labeling user concerning the labeled user;
wherein the step of storing the labeling user, the labeled user, and the label information made by the labeling user concerning the labeled user as a user relationship, and establishing a label library based on at least one user relationship in the social network includes: storing the labeling user, the labeled user, the label information made by the labeling user concerning the labeled user, and the validity period of the label information as a user relationship, and establishing the label library based on at least one user relationship in the social network; and
when the validity period of the label information expires, deleting the labeling user, the labeled user, and the label information made by the labeling user concerning the labeled user related to the validity period of the label information from the label library.

In another aspect, embodiments of the present invention also provide a method for searching for a user, including:
receiving a search request sent to a label library; the search request at least including a search initiator and a search keyword; the label library being established on the basis of at least one user relationship in a social network in which a labeling user, a labeled user, and label information made by the labeling user concerning the labeled user are stored as a user relationship;
on the basis of the at least one user relationship in the label library, determining a contact of a predetermined level of the search initiator; the contact of the predetermined level being a contact in a user relationship with the search initiator within the predetermined level based on the at least one user relationship;
searching for label information matching with the search keyword among label information related to the contact being a labeling user in the label library; and
returning the matched label information that is searched out.

In the embodiments of the present invention, the contact may be found by searching for the label information in the label library, which allows the user to accurately and quickly find a user satisfying the condition from the contact of the predetermined level. Since the user is searched out according to the label information made by the contact, the user that is searched out is more reliable, thereby improving success rate of the search.

In an embodiment, the search request is sent by the search initiator to the label library; and
the step of returning the matched label information that is searched out is: sending information of a labeled user related to the matched label information to the search initiator.

In an embodiment, the search request is a search request in which the search initiator is a labeled user related to a piece of label information in the label library, and the search keyword is acquired from the piece of label information; and
the step of returning the matched label information that is searched out is: sending the matched label information to the search initiator and/or a labeled user related to the matched label information.

In the embodiments of the present invention, the user may be recommended initiatively and accurately by matching label information of the user, which saves a search process, and saves time and energy for the user.

In an embodiment, the predetermined level is defined by the search initiator or defined in default.

In an embodiment, the method further includes:
on the basis of the at least one user relationship in the label library, acquiring a user relationship between the search initiator and a labeling user related to the matched label information, and a user relationship between the search initiator and a labeled user related to the matched label information; and
sending the acquired user relationship to the search initiator and/or the labeled user related to the matched label information.

In another aspect, embodiments of the present invention also provide a device for establishing a label library, including:
a first receiving module, configured to receive label information made by a labeling user concerning a labeled user in a social network; and
a label-library-establishing module, configured to store the labeling user, the labeled user, and the label information made by the labeling user concerning the labeled user as a user relationship, and establish a label library based on at least one user relationship in the social network.

In an embodiment, the label information made by the labeling user concerning the labeled user includes one or more items of information concerning the labeled user: occupation, skill, interest, adored celebrity, working state, and personal life state.

In an embodiment, the device further includes:
a second receiving module, configured to receive a request sent from the labeled user for inviting at least one labeling user to label the labeled user; and
a first sending module, configured to send a request for labeling the labeled user to each of the at least one labeling user.

In an embodiment, the request sent from the labeled user for inviting at least one labeling user to label the labeled user includes: label information made by the labeled user concerning himself or herself; and
the request for labeling the labeled user to each of the at least one labeling user includes: the label information made by the labeled user concerning himself or herself.

In an embodiment, the device further includes:
a first judging module, configured to judge whether the labeled user permits labeling;
wherein the label-library-establishing module is configured to, when the labeled user permits labeling, store the labeling user, the labeled user, and the label information made by the labeling user concerning the labeled user as a user relationship, and establish the label library based on at least one user relationship in the social network.

In an embodiment, the device further includes:
a second sending module, configured to send the label information made by the labeling user concerning the labeled user to the labeled user for confirmation; and
a second judging module, configured to judge whether a message indicating that the labeled user accepts the label information is received;
wherein the label-library-establishing module is configured to, when the message indicating that the labeled user accepts the label information is received, store the labeling user, the labeled user, and the label information made by the labeling user concerning the labeled user as a user relationship, and establish the label library based on at least one user relationship in the social network.

In an embodiment, the device further includes:
a third sending module, configured to send the label information made by the labeling user concerning the labeled user to the labeled user for additional information adding; and
a third receiving module, configured to receive the label information having additional information added by the labeled user;
wherein the label-library-establishing module is configured to store the labeling user, the labeled user, and the additional information added label information as a user relationship, and establish the label library based on at least one user relationship in the social network.

In an embodiment, the device further includes:
a first acquiring module, configured to acquire a validity period of the label information made by the labeling user concerning the labeled user;
wherein the label-library-establishing module is configured to store the labeling user, the labeled user, the label information made by the labeling user concerning the labeled user, and the validity period of the label information as a user relationship, and establish the label library based on at least one user relationship in the social network; and
a deleting module, configured to, when the validity period of the label information expires, delete the labeling user, the labeled user, and the label information made by the labeling user concerning the labeled user related to the validity period of the label information from the label library.

In another aspect, embodiments of the present invention also provide a device for searching for a user, including:
a fourth receiving module, configured to receive a search request sent to a label library; the search request at least including a search initiator and a search keyword; the label library being established based on at least one user relationship in a social network in which a labeling user, a labeled user, and label information made by the labeling user concerning the labeled user are stored as a user relationship;
a determining module, configured to, on the basis of the at least one user relationship in the label library, determine a contact of a predetermined level of the search initiator; the contact of the predetermined level being a contact in a user relationship with the search initiator within the predetermined level based on the at least one user relationship;
a searching module, configured to search for label information matching with the search keyword among label information related to the contact being a labeling user in the label library; and
a returning module, configured to return the matched label information that is searched out.

In an embodiment, the search request is sent by the search initiator to the label library; and
the returning module is configured to send information of a labeled user related to the matched label information to the search initiator.

In an embodiment, the search request is a search request in which the search initiator is a labeled user related to a piece of label information in the label library, and the search keyword is acquired from the piece of label information; and
the returning module is configured to send the matched label information to the search initiator and/or a labeled user related to the matched label information.

In an embodiment, the predetermined level is defined by the search initiator or defined in default.

In an embodiment, the device further includes:
a second acquiring module, configured to, on the basis of the at least one user relationship in the label library, acquire a user relationship between the search initiator and a labeling user related to the matched label information, and a user relationship between the search initiator and a labeled user related to the matched label information; and
a fourth sending module, configured to send the acquired user relationship to the search initiator and/or the labeled user related to the matched label information. Other features and advantages of the embodiments of the invention will be set forth in the following specification. Moreover, it will become apparent partly from the specification, or be understood by implementing the present invention. The object and other advantages of the present invention may be realized and achieved by structures specially specified in the written specification, the claims and the accompanied drawings.

It is to be understood that both the foregoing general description and the following detailed description are exemplary and explanatory only and are not restrictive of the invention, as claimed.

Hereinafter, a further detailed description will be given to the technical solutions of the embodiments of the invention with reference to the accompanied drawings and the embodiments.

### BRIEF DESCRIPTION OF THE DRAWINGS

The accompanying drawings, for further understanding of the embodiments of the present invention, constitute a part of this specification, together with the embodiments of the invention, serve to explain the present invention, and should not constitute limitation to the embodiments of the invention. In the drawings:
Fig. 1 is an exemplary flowchart of a general method for establishing a label library according to an embodiment of the present invention;
Fig. 2 is an exemplary flowchart of a first detailed method for making a label according to an embodiment of the present invention;
Fig. 3 is an exemplary flowchart of a second detailed method for making a label according to an embodiment of the present invention;
Fig. 4 is an exemplary flowchart of a third detailed method for making a label according to an embodiment of the present invention;
Fig. 5 is an exemplary flowchart of a fourth detailed method for making a label according to an embodiment of the present invention;
Fig. 6 is an exemplary flowchart of a fifth detailed method for making a label according to an embodiment of the present invention;
Fig. 7 is an exemplary flowchart of a general method for searching for a user with a label library according to an embodiment of the present invention;
Fig. 8 is an exemplary flowchart of a first detailed method for searching for a user according to an embodiment of the present invention;
Fig. 9 is an exemplary flowchart of a second detailed method for searching for a user according to an embodiment of the present invention;
Fig. 10 is an exemplary flowchart of a detailed method for establishing a user relationship with a user that is searched out according to an embodiment of the present invention;
Fig. 11 is a general block diagram of a device for establishing a label library according to an embodiment of the present invention;
Fig. 12 is a first detailed block diagram of a device for establishing a label library according to an embodiment of the present invention;
Fig. 13 is a second detailed block diagram of a device for establishing a label library according to an embodiment of the present invention;
Fig. 14 is a third detailed block diagram of a device for establishing a label library according to an embodiment of the present invention;
Fig. 15 is a fourth detailed block diagram of a device for establishing a label library according to an embodiment of the present invention;
Fig. 16 is a fifth detailed block diagram of a device for establishing a label library according to an embodiment of the present invention;
Fig. 17 is a general block diagram of a device for searching for a user according to an embodiment of the present invention; and
Fig. 18 is a detailed block diagram of a device for searching for a user according to an embodiment of the present invention.

Through the above accompany drawings, the specific embodiments of the present invention have been shown, for which a more detailed description will be given as below. These drawings and textual description are not intended to limit the scope of the concept of the present invention in any manner, but to explain the concept of the present invention to those skilled in the art through particular embodiments.

### DETAILED DESCRIPTION

Preferred embodiments of the present invention are described below with reference to the attached drawings. However, it should be understood that the preferred embodiments described herein are merely for explaining and illustrating the embodiments of the present invention, but are not intended to limit the embodiments of the present invention.

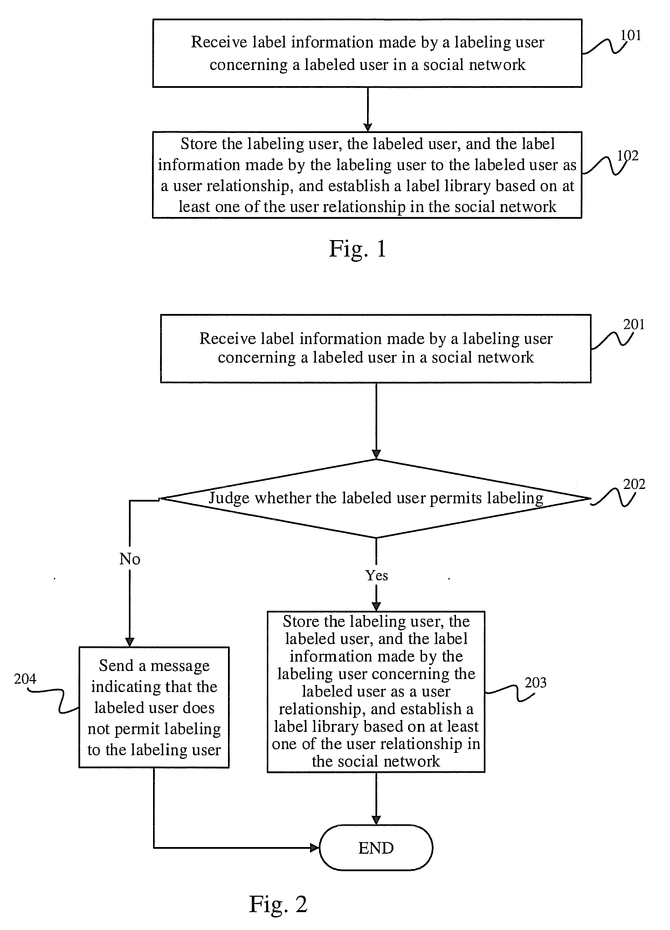

Methods for establishing a label library and for searching for a user according to the embodiments of the present invention are implemented on a server for providing social networking services. Referring to Fig. 1, a method for establishing a label library according to an embodiment of the present invention includes the following steps.

In step S101, label information made by a labeling user concerning a labeled user in a social network is received.

In an embodiment, the label information made by the labeling user concerning the labeled user may include one or more items of information concerning the labeled user: occupation, skill, interest, adored celebrity, working state (such as hunting a job or looking for an employee), personal life state (for example, single), and the like.

In step S102, the labeling user, the labeled user, and the label information made by the labeling user concerning the labeled user are stored as a user relationship, and a label library is established based on at least one of the user relationships in the social network.

In an embodiment, a validity period of the label information made by the labeling user concerning the labeled user may be acquired; the labeling user, the labeled user, the label information made by the labeling user concerning the labeled user, and the validity period of the label information may be stored as a user relationship; and a label library may be established based on at least one of the user relationships in the social network. When the validity period of the label information expires, the labeling user, the labeled user, and the label information made by the labeling user concerning the labeled user related to the validity period of the label information are deleted from the label library. The validity period of the label information may be defined by the labeling user, or may be defined by the labeled user, or may be defined by the system.

In the embodiments of the present invention, a user may label other users in a social network; and a label library is established based on the at least one user relationship related to the made label. With the label library, a search for a contact based on a label and the user relationship may be performed. Since the search is based on both conditions of label information and the user relationship, the user that is searched out has an indirect relationship with the searching user. Therefore, the user that is searched out is more reliable, and the success rate of the search may be improved.

Referring to Fig. 2, in this embodiment, it may be further judged whether the labeled user permits labeling, so as to determine whether to store the label in the label library. This step may prevent a user from being arbitrarily labeled by other users. The detailed method includes the following steps.

In step S201, label information made by a labeling user concerning a labeled user in a social network is received.

In step S202, it is judged whether the labeled user permits labeling; if the labeled user permits labeling, step S203 is performed; and otherwise, step S204 is performed.

For example, it may be judged, by reading a value of a field "Whether permit labeling" defined by the labeled user, whether the labeled user permits labeling; if the value of the field is "Yes", it indicates that the labeled user permits labeling him or her; and if the value of the field is "No", it indicates that the labeled user does not permit labeling him or her.

In step S203, the labeling user, the labeled user, and the label information made by the labeling user concerning the labeled user are stored as a user relationship, and a label library is established based on at least one of the user relationships in the social network.

In step S204, a message indicating that the labeled user does not permit labeling is sent to the labeling user.

In the embodiments of the present invention, it is judged, according to the settings of the labeled user, whether to store the label information made by the labeling user concerning the labeled user; and only when the labeled user permits labeling, a label concerning the labeled user may be made. This may effectively prevent the user from being arbitrarily labeled and improve security and effectiveness of the label.

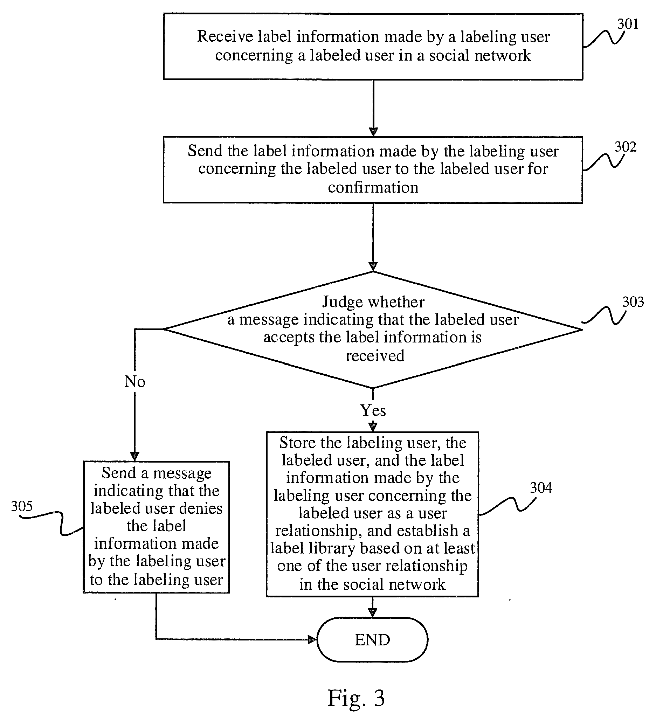

In an embodiment of the present invention, a step of judging whether the labeled user accepts the label information to determine whether to store the label in the label library may be additionally provided. This step may also prevent the user from being arbitrarily labeled by other users. Referring to Fig. 3, the detailed method includes the following steps.

In step S301, label information made by a labeling user concerning a labeled user in a social network is received.

In step S302, the label information made by the labeling user concerning the labeled user is sent to the labeled user for confirmation.

In step S303, it is judged whether a message indicating that the labeled user accepts the label information is received; if the message is received, step S304 is performed; and if it is not received, step S305 is performed.

In step S304, the labeling user, the labeled user, and the label information made by the labeling user concerning the labeled user are stored as a user relationship, and a label library is established based on at least one of the user relationships in the social network.

In step S305, a message indicating that the labeled user denies the label information made by the labeling user is sent to the labeling user.

In the embodiments of the present invention, it is additionally judged whether the labeled user accepts the label information made by the labeling user concerning the labeled user, and the label information may be stored into the label library only when the labeled user accepts it. Thereby, it may effectively prevent the user from being arbitrarily labeled and improves security and effectiveness of the label.

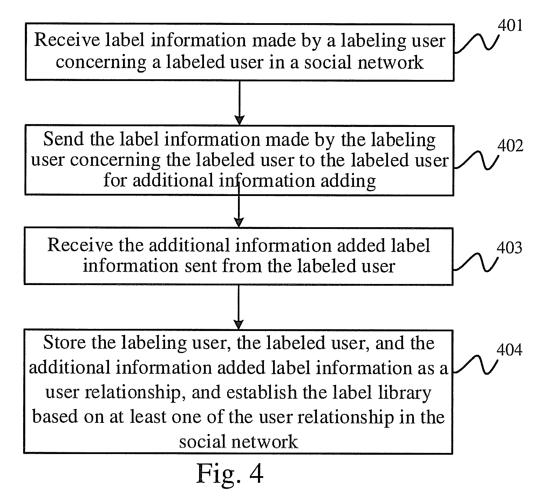

In the embodiments of the present invention, after the labeling user labels the labeled user, the labeled user may also add additional information to the label information. Referring to Fig. 4, the detailed method includes the following steps.

In step S401, label information made by a labeling user concerning a labeled user in a social network is received.

In step S402, the label information made by the labeling user concerning the labeled user is sent to the labeled user for additional information adding.

The additional information added by the labeled user to the label information refers to a situation where, for example, the label information made by the labeling user to the labeled user is "software engineer", the labeled user adds additional information to the label information, with the additional information of programming languages and related development skills mastered by the labeled user, so as to make the label more complete, such that the label information may reflect the labeled user related to the label in more detail.

In step S403, the additional information added label information sent from the labeled user is received.

In step S404, the labeling user, the labeled user, and the additional information added label information are stored as a user relationship, and the label library is established based on at least one of the user relationships in the social network.

In the embodiments of the present invention, the labeled user may add additional information to the label information to enrich the label content, so the label may be more detailed and more accurate.

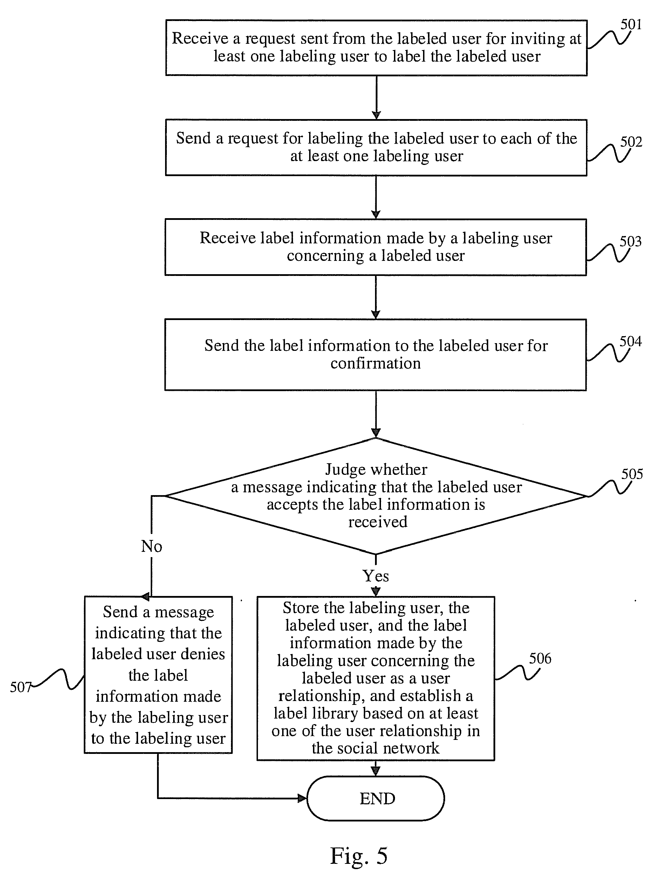

In an embodiment of the present invention, the labeled user may also invite other users to label himself or herself. Referring to Fig. 5, the detailed method includes the following steps.

In step S501, a request sent from the labeled user for inviting at least one labeling user to label the labeled user is received.

In step S502, a request for labeling the labeled user to each of the at least one labeling user is sent.

In step S503, label information made by a labeling user concerning a labeled user is received.

In step S504, the label information is sent to the labeled user for confirmation.

In step S505, it is judged whether a message indicating that the labeled user accepts the label information is received; if the message is received, step S506 is performed; and if it is not received, step S507 is performed.

In step S506, the labeling user, the labeled user, and the label information made by the labeling user concerning the labeled user are stored as a user relationship, and a label library is established based on at least one of the user relationships in the social network.

In step S507, a message indicating that the labeled user denies the label information made by the labeling user is sent to the labeling user.

In the embodiments of the present invention, a labeled user may initiatively invite another user to make a label for him or her, instead of passively waiting for another user to make a label for him or her, which improves flexibility of labeling and enhances user experience.

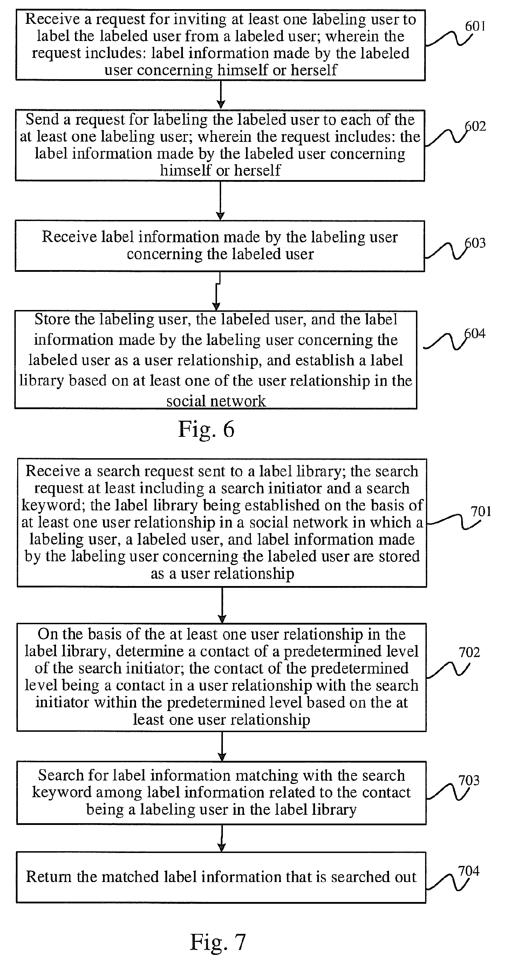

In an embodiment of the present invention, the labeled user may also invite other users to confirm the label information made by the labeled user for himself or herself. Referring to Fig. 6, the detailed method includes the following steps.

In step S601, a request for inviting at least one labeling user to label the labeled user is received from a labeled user; wherein the request includes: label information made by the labeled user concerning himself or herself.

In step S602, a request for labeling the labeled user is sent to each of the at least one labeling user; wherein the request includes: the label information made by the labeled user concerning himself or herself.

In step S603, label information made by the labeling user concerning the labeled user is received.

When the labeling user makes no modification to the label information made by the labeled user concerning himself or herself, the label information made by the labeled user concerning himself or herself is used as the label information made by the labeling user concerning the labeled user.

In step S604, the labeling user, the labeled user, and the label information made by the labeling user concerning the labeled user are stored as a user relationship, and a label library is established based on at least one of the user relationships in the social network.

In the embodiments of the present invention, a technical solution is provided in which the labeled user may provide the label information and request the labeling user to make a confirmation. Thereby, the labeled user may make label information by himself or herself, and the labeling user only needs to make a confirmation or modification of the label information, which further improves the flexibility of operations of the labeling user and the labeled user and enhances user experience.

In an embodiment of the present invention, based on the above label library, a search may be performed for a user satisfying a specific condition by searching the label information related to a contact of the user being a labeling user in the label library. Referring to Fig. 7, the method includes the following steps.

In step S701, a search request sent to a label library is received; the search request at least includes a search initiator and a search keyword; the label library being established on the basis of at least one user relationship in a social network, in which a labeling user, a labeled user, and label information made by the labeling user concerning the labeled user are stored as a user relationship.

In step S702, on the basis of the at least one user relationship in the label library, a contact of a predetermined level of the search initiator is determined; the contact of the predetermined level being a contact in a user relationship with the search initiator within the predetermined level based on the at least one user relationship.

For example, a user A's friend user B is a first-level contact of the user A, and the user B's friend user C is a second-level contact of the user A (in this case, the user C is not a first-level contact of user A), and the user C's friend user D is a third-level contact of the user A (in this case, the user D is neither a first-level nor a second-level contact of the user A). The predetermined level may be defined by the search initiator or defined by the system.

In step S703, label information matching with the search keyword is searched for among label information related to the contact being a labeling user in the label library.

In step S704, the matched label information that is searched out is returned.

In an embodiment, on the basis of the at least one user relationship in the label library, a user relationship between the search initiator, a labeling user related to the matched label information and a labeled user related to the matched label information may be acquired; and the acquired user relationship is sent to the search initiator and/or the labeled user related to the matched label information. For example, the user A searches out the second-level contact user C of the user A by searching for the label made by the first-level contact user B of the user A, and hence the user A searches out the labeled user C as in a user relationship with the user A via the user B.

In the embodiments of the present invention, the contact may be found by searching for the label information in the label library, which allows the user to accurately and quickly find a user satisfying the condition from the contact of the predetermined level. Since the user is searched out according to the label information made by the contact, the user that is searched out is more reliable, thereby improving success rate of the search.

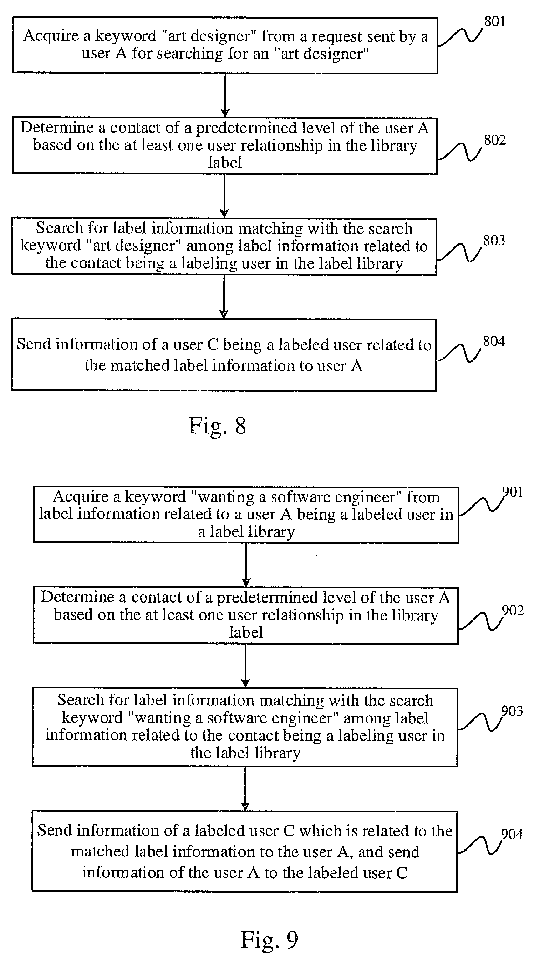

Hereinafter, the method for searching for a user is described with reference to two embodiments. Referring to Fig. 8, a first method for searching for a user includes the following steps.

In step S801, a keyword "art designer" is acquired from a request sent by a user A for searching for an "art designer".

In step S802, a contact of a predetermined level of the user A is determined based on the at least one user relationship in the library label.

In step S803, label information matching with the search keyword "art designer" is searched for among label information related to the contact being a labeling user in the label library.

In step S804, information of a user C being a labeled user related to the matched label information is sent to user A.

For example, a user B is a first-level contact of the user A, and label information made by the user B to his or her friend the user C is "art designer". The user A wants an art designer, but does not know the user C. The user A may search out the user C with the label "art designer" made by the user B. Obviously, this solution may expand the search range of the user A, and the user A and the user C may have a common friend the user B. Therefore, the searched contact is more reliable. In the embodiments of the present invention, a user may be searched out from an indirect contact of the user according to a search request of the user.

Referring to Fig. 9, a second method for searching for a user includes the following steps.

In step S901, a keyword "wanting a software engineer" is acquired from label information related to a user A being a labeled user in a label library.

In step S902, a contact of a predetermined level of the user A is determined based on the at least one user relationship in the library label.

In step S903, label information matching with the search keyword "wanting a software engineer" is searched for among label information related to the contact being a labeling user in the label library.

Labels matching with the keyword "wanting a software engineer" may be, for example, "I am a software engineer", "Engaged in software engineering", "Software engineer", "IT worker", or the like.

In step S904, information of a labeled user C which is related to the matched label information is sent to the user A, and information of the user A is sent to the labeled user C.

In other embodiments of the present invention, in step S904, information of the labeled user C which is related to the matched label information may be sent to the user A, or information of the user A may be sent to the labeled user C.

In the embodiments of the present invention, the user may be recommended initiatively and accurately by matching label information of the user, which saves a search process, and saves time and energy for the user. The method may be performed periodically at a predetermined time interval, to improve the matching efficiency.

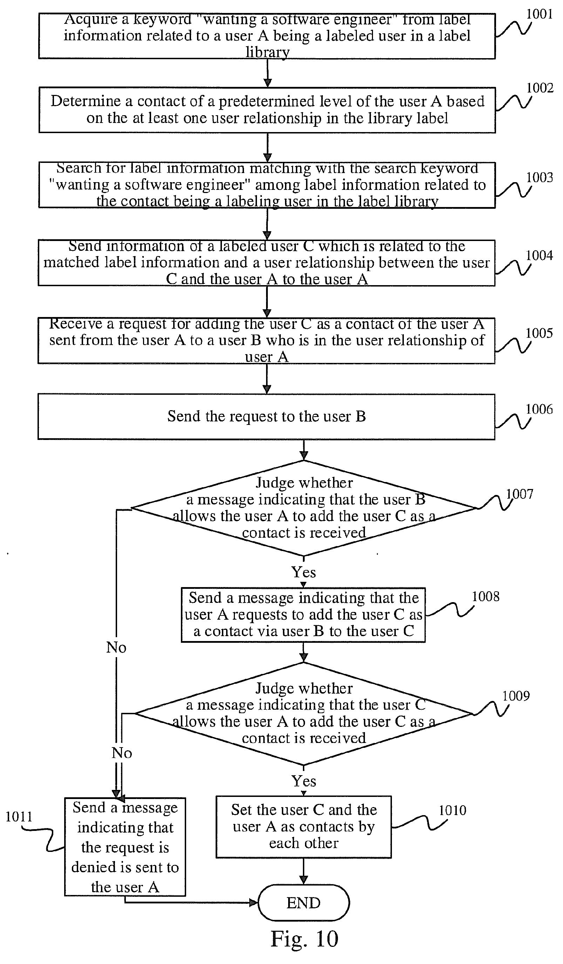

In the embodiments of the present invention, in order to protect user's privacy, after a labeled user related to the matched label information is searched out, the search initiator and the labeled user related to the matched label information may not directly contact each other, but establish a user relationship via the contact in the user relationship. Referring to Fig. 10, the detailed method includes the following steps.

In step S1001, a keyword "wanting a software engineer" is acquired from label information related to a user A being a labeled user in a label library.

In step S1002, a contact of a predetermined level of the user A is determined based on the at least one user relationship in the library label.

In step S1003, label information matching with the search keyword "wanting a software engineer" is searched for among label information related to the contact being a labeling user in the label library.

In step S1004, information of a labeled user C which is related to the matched label information and a user relationship between the user C and the user A are sent to the user A.

In this step, the user relationship between the user C and the user A may also be sent to the user C, to ensure that the user C is capable of timely acquiring other users whose label information matches with his or her own label information.

In step S1005, a request for adding the user C as a contact of the user A sent from the user A to user B who is in the user relationship of the user A is received.

In step S1006, the request is sent to the user B.

In step S1007, it is judged whether a message indicating that the user B allows the user A to add the user C as a contact is received; if the message is received, step S1008 is performed; and if it is not received, step S1011 is performed.

In step S1008, a message indicating that the user A requests to add the user C as a contact via user B is sent to the user C.

In step S1009, it is judged whether a message indicating that the user C allows the user A to add the user C as a contact is received; if the message is received, step S1010 is performed; and if it is not received, step S1011 is performed.

In step S1010, the user C and the user A are set as contacts by each other.

In step S1011, a message indicating that the request is denied is sent to the user A.

In the embodiments of the present invention, the user A can establish a user relationship with the user C only via a contact in the user relationship. Thus, it may be ensured that the privacy of indirect contacts may not be leaked or affected.

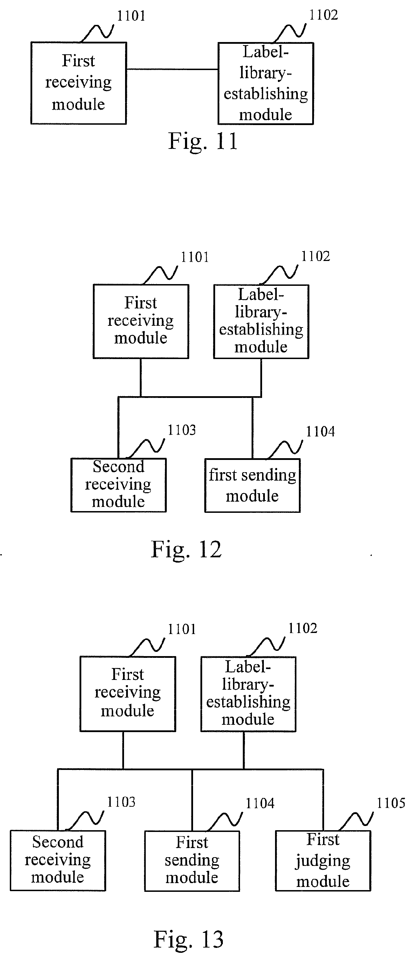

Embodiments of the present invention also provide a device for establishing a label library. Referring to Fig. 11, the device includes:
a first receiving module 1101, configured to receive label information made by a labeling user concerning a labeled user in a social network; and
a label-library-establishing module 1102, configured to store the labeling user, the labeled user, and the label information made by the labeling user concerning the labeled user as a user relationship, and establish a label library based on at least one of the user relationships in the social network.

In an embodiment, the label information made by the labeling user concerning the labeled user includes one or more items of information concerning the labeled user: occupation, skill, interest, adored celebrity, working state, and personal life state.

Referring to Fig. 12, the device further includes:
a second receiving module 1103, configured to receive a request sent from the labeled user for inviting at least one labeling user to label the labeled user; and
a first sending module 1104, configured to send a request for labeling the labeled user to each of the at least one labeling user.

In an embodiment, the request sent from the labeled user for inviting at least one labeling user to label the labeled user includes: label information made by the labeled user concerning himself or herself; and
the request for labeling the labeled user sent to each of the at least one labeling user includes: the label information made by the labeled user concerning himself or herself.

In an embodiment, referring to Fig. 13, the device further includes:
a first judging module 1105, configured to judge whether the labeled user permits labeling;
the label-library-establishing module 1102 being configured to, when the labeled user permits labeling, store the labeling user, the labeled user, and the label information made by the labeling user concerning the labeled user as a user relationship, and establish the label library based on at least one of the user relationships in the social network.

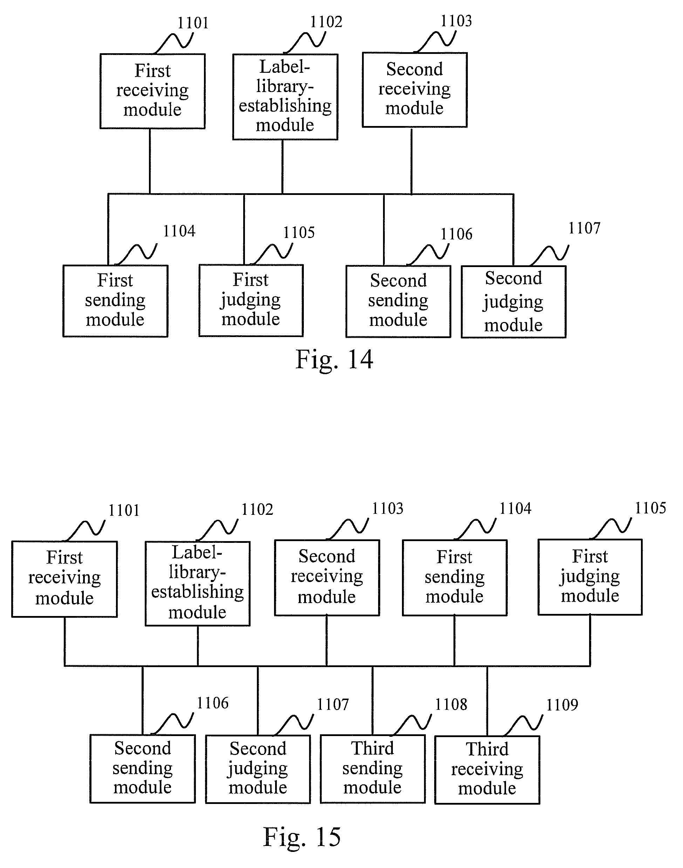

In an embodiment, referring to Fig. 14, the device further includes:
a second sending module 1106, configured to send the label information made by the labeling user concerning the labeled user to the labeled user for confirmation; and
a second judging module 1107, configured to judge whether a message indicating that the labeled user accepts the label information is received;
the label-library-establishing module 1102 being configured to, when the message indicating that the labeled user accepts the label information is received, store the labeling user, the labeled user, and the label information made by the labeling user concerning the labeled user as a user relationship, and establish the label library based on at least one of the user relationships in the social network.

In an embodiment, referring to Fig. 15, the device further includes:
a third sending module 1108, configured to send the label information made by the labeling user concerning the labeled user to the labeled user for additional information adding; and
a third receiving module 1109, configured to receive the label information having additional information added by the labeled user;
the label-library-establishing module 1102 being configured to store the labeling user, the labeled user, and the additional information added label information as a user relationship, and establish the label library based on at least one of the user relationships in the social network.

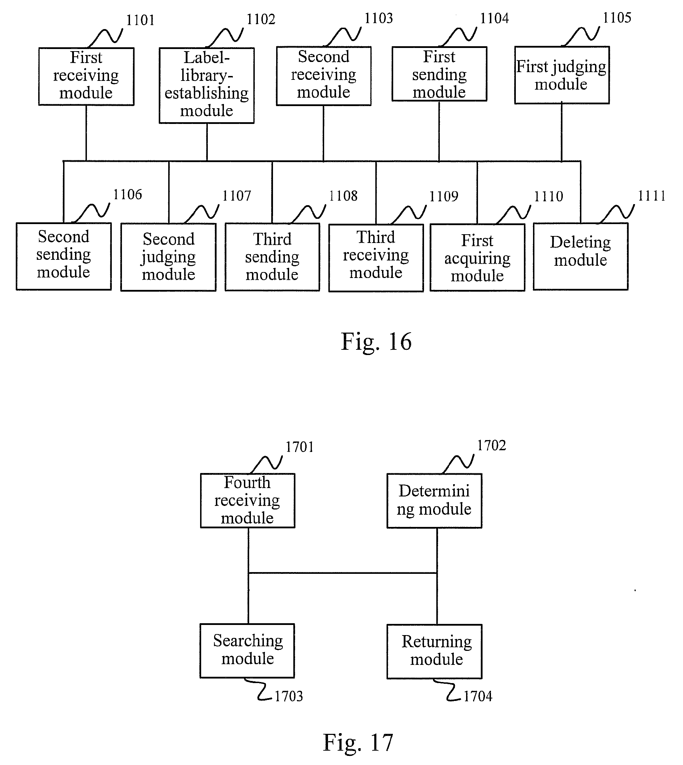

In an embodiment, referring to Fig. 16, the device further includes:
a first acquiring module 1110, configured to acquire a validity period of the label information made by the labeling user concerning the labeled user;
the label-library-establishing module 1102 being configured to store the labeling user, the labeled user, the label information made by the labeling user concerning the labeled user, and the validity period of the label information as a user relationship, and establish the label library based on at least one of the user relationships in the social network; and
a deleting module 1111, configured to, when the validity period of the label information expires, delete the labeling user, the labeled user, and the label information made by the labeling user concerning the labeled user related to the validity period of the label information from the label library.

Embodiments of the present invention also provide a device for searching for a user. Referring to Fig. 17, the device includes:
a fourth receiving module 1701, configured to receive a search request sent to a label library; the search request at least including a search initiator and a search keyword; the label library being established based on at least one user relationship in a social network in which a labeling user, a labeled user, and label information made by the labeling user concerning the labeled user are stored as a user relationship;
a determining module 1702, configured to, on the basis of the at least one user relationship in the label library, determine a contact of a predetermined level of the search initiator; the contact of the predetermined level being a contact in a user relationship with the search initiator within the predetermined level based on the at least one user relationship; and
a searching module 1703, configured to search for label information matching with the search keyword among label information related to the contact being a labeling user in the label library; and
a returning module 1704, configured to return the matched label information that is searched out.

In an embodiment, the search request is sent by the search initiator to the label library; and
the returning module is configured to send information of a labeled user related to the matched label information to the search initiator.

In an embodiment, the search request is a search request in which the search initiator is a labeled user related to a piece of label information in the label library, and the search keyword is acquired from the piece of label information; and
the returning module is configured to send the matched label information to the search initiator and/or a labeled user related to the matched label information.

In an embodiment, the predetermined level is defined by the search initiator or defined in default.

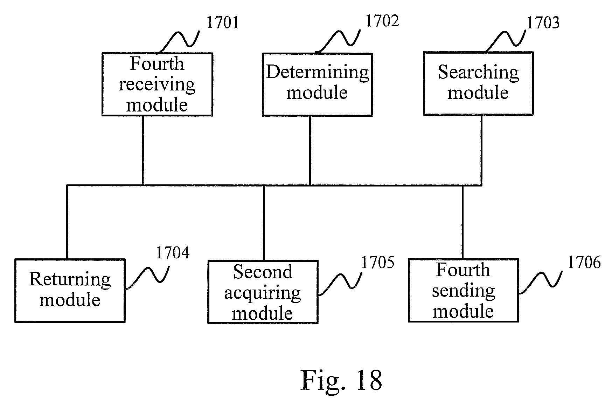

In an embodiment, referring to Fig. 18, the device further includes:
a second acquiring module 1705, configured to, on the basis of the at least one user relationship in the label library, acquire a user relationship between the search initiator and a labeling user related to the matched label information, and a user relationship between the search initiator and a labeled user related to the matched label information; and
a fourth sending module 1706, configured to send the acquired user relationship to the search initiator and/or the labeled user related to the matched label information. Other features and advantages of the embodiments of the invention will be set forth in the following specification. Moreover, it will become apparent partly from the specification, or be understood by implementing the present invention. The object and other advantages of the present invention may be realized and achieved by structures specially specified in the written specification, the claims and the accompanied drawings.

It should be understood by those skilled in the art that, the embodiments of the present invention may be provided as methods, devices or computer program products. Therefore, the embodiments of the present invention may take forms of embodiments of mere hardware, mere software, or a combination of software and hardware. Furthermore, the present invention may take forms of computer program products executed on one or more computer usable storage media (including but not limited to disk storage, CD-ROM and optical storage, etc.) containing computer usable program codes.

The present invention is described with reference to the flowchart and/or a block diagram of the method, the mobile device (system) and a computer program product according to the embodiments of the present invention. It should be understood that each process and/or block in the flowcharts and/or block diagrams, and combinations of processes and/or blocks in the flowcharts and/or block diagrams, may be realized by computer program instructions. These computer program instructions may be supplied to a generate-purpose computer, a special-purpose computer, an embedded processor, or processors of other programmable data processing devices, to create a machine, such that a device for realizing functions designated in one or more processes in the flowcharts and/or in one or more blocks in the block diagrams, may be produced by instructions performed by a computer or processors of other programmable data processing devices.

These computer program instructions may also be stored in a computer readable storage that can boot a computer or other programmable data processing devices to operate in a specific way, such that a manufactured articles including an instruction device may be produced by the instructions stored in said computer readable storage, and said instruction device realizes the functions designated in one or more processes in the flowcharts and/or in one or more blocks in the block diagrams.

These computer program instructions may further be loaded into a computer or other programmable data processing devices, such that a series of operating steps may be performed on the computer or other programmable data processing devices, so as to generate processes realized by the computer, such that steps for realizing the functions designated in one or more processes in the flowcharts and/or in one or more blocks in the block diagrams may be provided by the instructions executed on the computer or other programmable data processing devices.

Apparently, those skilled in the art may make various modifications and variations to the present invention without departing the spirit and scope of the invention. Thus, the invention intends to include these modifications and variations as long as they belong to the scope of the claims of the present invention and the equivalent technology thereof.

## Claims

1. A method for establishing a label library, **characterized in that** the method comprises:
receiving label information made by a labeling user concerning a labeled user in a social network; and
storing the labeling user, the labeled user, and the label information made by the labeling user concerning the labeled user as a user relationship, and establishing a label library based on at least one user relationship in the social network.

2. The method according to claim 1, **characterized in that** the label information made by the labeling user concerning the labeled user comprises one or more items of information of the labeled user: occupation, skill, interest, adored celebrity, working state, and personal life state.

3. The method according to claim 1, **characterized in that** prior to the step of receiving label information made by a labeling user concerning a labeled user in a social network, the method further comprises:
receiving a request sent from the labeled user for inviting at least one labeling user to label the labeled user; and
sending a request for labeling the labeled user to each of the at least one labeling user.

4. The method according to claim 3, **characterized in that** the request sent from the labeled user for inviting at least one labeling user to label the labeled user comprises: label information made by the labeled user concerning himself or herself; and
the request for labeling the labeled user sent to each of the at least one labeling user comprises: the label information made by the labeled user concerning himself or herself.

5. The method according to claim 1, **characterized in that** after the step of receiving label information made by a labeling user to a labeled user in a social network, the method further comprises:
judging whether the labeled user permits labeling;
wherein the step of storing the labeling user, the labeled user, and the label information made by the labeling user concerning the labeled user as a user relationship, and establishing a label library based on at least one user relationship in the social network comprises: when the labeled user permits labeling, storing the labeling user, the labeled user, and the label information made by the labeling user concerning the labeled user as a user relationship, and establishing the label library based on at least one user relationship in the social network.

6. The method according to claim 1, **characterized in that** after the step of receiving label information made by a labeling user concerning a labeled user in a social network, the method further comprises:
sending the label information made by the labeling user concerning the labeled user to the labeled user for confirmation; and
judging whether a message indicating that the labeled user accepts the label information is received;
wherein the step of storing the labeling user, the labeled user, and the label information made by the labeling user concerning the labeled user as a user relationship, and establishing a label library based on at least one user relationship in the social network comprises: when the message indicating that the labeled user accepts the label information is received, storing the labeling user, the labeled user, and the label information made by the labeling user concerning the labeled user as a user relationship, and establishing the label library based on at least one user relationship in the social network.

7. The method according to claim 1, **characterized in that** after the step of receiving label information made by a labeling user concerning a labeled user in a social network, the method further comprises:
sending the label information made by the labeling user concerning the labeled user to the labeled user for additional information adding; and
receiving the label information having additional information added by the labeled user;
wherein the step of storing the labeling user, the labeled user, and the label information made by the labeling user concerning the labeled user as a user relationship, and establishing a label library based on at least one user relationship in the social network comprises: storing the labeling user, the labeled user, and the additional information added label information as a user relationship, and establishing the label library based on at least one user relationship in the social network.

8. The method according to claim 1, **characterized in that** the method further comprises:
acquiring a validity period of the label information made by the labeling user concerning the labeled user;
wherein the storing the labeling user, the labeled user, and the label information made by the labeling user concerning the labeled user as a user relationship, and establishing a label library based on at least one user relationship in the social network comprises: storing the labeling user, the labeled user, the label information made by the labeling user concerning the labeled user, and the validity period of the label information as a user relationship, and establishing the label library based on at least one user relationship in the social network; and
when the validity period of the label information expires, deleting the labeling user, the labeled user, and the label information made by the labeling user concerning the labeled user related to the validity period of the label information from the label library.

9. A method for searching for a user, **characterized in that** the method comprises:
receiving a search request sent to a label library; the search request at least comprising a search initiator and a search keyword; the label library being established on the basis of at least one user relationship in a social network in which a labeling user, a labeled user, and label information made by the labeling user concerning the labeled user are stored as a user relationship;
on the basis of the at least one user relationship in the label library, determining a contact of a predetermined level of the search initiator; the contact of the predetermined level being a contact in a user relationship with the search initiator within the predetermined level based on the at least one user relationship;
searching for label information matching with the search keyword among label information related to the contact being a labeling user in the label library; and
returning the matched label information that is searched out.

10. The method according to claim 9, **characterized in that** the search request is sent by the search initiator to the label library; and
the step of returning the matched label information that is searched out is: sending information of a labeled user related to the matched label information to the search initiator.

11. The method according to claim 9, **characterized in that** the search request is a search request in which the search initiator is a labeled user related to a piece of label information in the label library, and the search keyword is acquired from the piece of label information; and
the step of returning the matched label information that is searched out is: sending the matched label information to the search initiator and/or a labeled user related to the matched label information.

12. The method according to any one of claims 9 to 11, **characterized in that** the predetermined level is defined by the search initiator or defined in default.

13. The method according to any one of claims 9 to 11, **characterized in that** the method further comprises:
on the basis of the at least one user relationship in the label library, acquiring a user relationship between the search initiator and a labeling user related to the matched label information, and a user relationship between the search initiator and a labeled user related to the matched label information; and
sending the acquired user relationships to the search initiator and/or the labeled user related to the matched label information.

14. A device for establishing a label library, **characterized in that** the device comprises:
a first receiving module, configured to receive label information made by a labeling user concerning a labeled user in a social network; and
a label-library-establishing module, configured to store the labeling user, the labeled user, and the label information made by the labeling user concerning the labeled user as a user relationship, and establish a label library based on at least one user relationship in the social network.

15. The device according to claim 14, **characterized in that** the label information made by the labeling user concerning the labeled user comprises one or more items of information concerning the labeled user: occupation, skill, interest, adored celebrity, working state, and personal life state.

16. The device according to claim 14, **characterized in that** the device further comprises:
a second receiving module, configured to receive a request sent from the labeled user for inviting at least one labeling user to label the labeled user; and
a first sending module, configured to send a request for labeling the labeled user to each of the at least one labeling user.

17. The device according to claim 16, **characterized in that** the request sent from the labeled user for inviting at least one labeling user to label the labeled user comprises: label information made by the labeled user concerning himself or herself; and
the request for labeling the labeled user to each of the at least one labeling user comprises:
the label information made by the labeled user concerning himself or herself.

18. The device according to claim 14, **characterized in that** the device further comprises:
a first judging module, configured to judge whether the labeled user permits labeling;
wherein the label-library-establishing module is configured to, when the labeled user permits labeling, store the labeling user, the labeled user, and the label information made by the labeling user concerning the labeled user as a user relationship, and establish the label library based on at least one user relationship in the social network.

19. The device according to claim 14, **characterized in that** the device further comprises:
a second sending module, configured to send the label information made by the labeling user concerning the labeled user to the labeled user for confirmation; and
a second judging module, configured to judge whether a message indicating that the labeled user accepts the label information is received;
wherein the label-library-establishing module is configured to, when the message indicating that the labeled user accepts the label information is received, store the labeling user, the labeled user, and the label information made by the labeling user concerning the labeled user as a user relationship, and establish the label library based on at least one user relationship in the social network.

20. The device according to claim 14, **characterized in that** the device further comprises:
a third sending module, configured to send the label information made by the labeling user concerning the labeled user to the labeled user for additional information adding; and
a third receiving module, configured to receive the label information having additional information added by the labeled user;
wherein the label-library-establishing module is configured to store the labeling user, the labeled user, and the additional information added label information as a user relationship, and establish the label library based on at least one user relationship in the social network.

21. The device according to claim 14, **characterized in that** the device further comprises:
a first acquiring module, configured to acquire a validity period of the label information made by the labeling user concerning the labeled user;
wherein the label-library-establishing module is configured to store the labeling user, the labeled user, the label information made by the labeling user concerning the labeled user, and the validity period of the label information as a user relationship, and establish the label library based on at least one user relationship in the social network; and
a deleting module, configured to, when the validity period of the label information expires, delete the labeling user, the labeled user, and the label information made by the labeling user concerning the labeled user related to the validity period of the label information from the label library.

22. A device for searching for a user, **characterized in that** the device comprises:
a fourth receiving module, configured to receive a search request sent to a label library; the search request at least comprising a search initiator and a search keyword; the label library being established based on at least one user relationship in a social network in which a labeling user, a labeled user, and label information made by the labeling user concerning the labeled user are stored as a user relationship;
a determining module, configured to, on the basis of the at least one user relationship in the label library, determine a contact of a predetermined level of the search initiator; the contact of the predetermined level being a contact in a user relationship with the search initiator within the predetermined level based on the at least one user relationship;
a searching module, configured to search for label information matching with the search keyword among label information related to the contact being a labeling user in the label library; and
a returning module, configured to return the matched label information that is searched out.

23. The device according to claim 22, **characterized in that** the search request is sent by the search initiator to the label library; and
the returning module is configured to send information of a labeled user related to the matched label information to the search initiator.

24. The device according to claim 22, **characterized in that** the search request is a search request in which the search initiator is a labeled user related to a piece of label information in the label library, and the search keyword is acquired from the piece of label information; and
the returning module is configured to send the matched label information to the search initiator and/or a labeled user related to the matched label information.

25. The device according to any one of claims 22 to 24, **characterized in that** the predetermined level is defined by the search initiator or defined in default.

26. The device according to any one of claims 22 to 24, **characterized in that** the device further comprises:
a second acquiring module, configured to, on the basis of the at least one user relationship in the label library, acquire a user relationship between the search initiator and a labeling user related to the matched label information, and a user relationship between the search initiator and a labeled user related to the matched label information; and
a fourth sending module, configured to send the acquired user relationships to the search initiator and/or the labeled user related to the matched label information.
